# EUROPEAN PATENT APPLICATION

(11) **EP 3 309 675 A2**
(43) Date of publication of application: **18.04.2018**
(21) Application number: 17196367.1
(22) Date of filing: 13.10.2017
(51) Int. Cl.: G06F 8/654

(54) **METHOD FOR UPDATING FIRMWARE OF A VEHICLE AND A VEHICLE SYSTEM**

(30) Priority: 14.10.2016 TW 105133149
(71) Applicant: Kwang Yang Motor Co., Ltd., Kaohsiung City 80794 (TW)
(72) Inventor: LIN, Chen-Sheng, 80794 Kaohsiung (TW); TSAI, Yi-Yang, 80794 Kaohsiung (TW); YEH, Nai-Kun, 11501 Taipei City (TW); HSU, Chi-Hui, 11501 Taipei City (TW); LIU, Te-Chuan, 11501 Taipei City (TW); CHEN, Li-Hui, 11501 Taipei City (TW); SU, Ping-Chen, 11501 Taipei City (TW)
(74) Representative: Stöckeler, Ferdinand

(57) **Abstract**

A method for updating firmware (330) of a vehicle (9) which includes a dashboard device (3) and a power device (8) and which is communicable with a mobile device (4) storing a program file is provided. The method includes: a) receiving, when the dashboard device (3) is powered by the power device (8), and after a wireless connection between the dashboard device (3) and the mobile device (4) is established, a data stream of the program file from the mobile device (4) via the wireless connection; b) making a pause in receiving the data stream when it is determined that the wireless connection is interrupted; c) resuming receiving the data stream after recovering the wireless connection from interruption; and d) repeating steps b) and c) so as to continue with data transfer of the program file from the mobile device (4).

## Description

The disclosure relates to a method and a system for updating firmware, and more particularly to a method for updating firmware of a vehicle and a system of a vehicle whose firmware is to be updated.

A conventional method for updating firmware of a dashboard of a vehicle is usually implemented by connecting a storage device which stores a program file for updating (e.g., a memory card or a flash drive) to the dashboard to enable transfer of the program file from the storage device to the dashboard of the vehicle, so the firmware of the dashboard can be updated by executing the program file. However, the conventional method is time consuming and the vehicle is unavailable for use during the process of updating the firmware of the dashboard. Furthermore, once transfer of the program file from the storage device to the dashboard is interrupted, data transmission usually has to restart from the very beginning.

Therefore, an object of the disclosure is to provide a system of a vehicle whose firmware is to be updated and a method for updating the firmware of the vehicle that can alleviate at least one of the drawbacks of the prior art.

According to one aspect of the disclosure, the vehicle includes a power device, and is communicable with a mobile device which stores a program file for updating the firmware. The system includes a dashboard device that is electrically connected to the power device. The dashboard device includes a wireless communication module, a storage module, and a processing module which is electrically connected to the wireless communication module and the storage module. The processing module is configured to receive, when the dashboard device is powered by the power device, and after establishing a wireless connection between the wireless communication module of the dashboard device and the mobile device, a data stream of the program file from the mobile device via the wireless connection, so as to store the data stream of the program file thus received in the storage module. The processing module is configured to make a pause in receiving the data stream of the program file from the mobile device when it is determined that the wireless connection between the dashboard device and the mobile device is interrupted. The processing module is configured to resume receiving the data stream of the program file from the mobile device via the wireless communication module after recovering the wireless connection between the dashboard device and the mobile device from interruption so as to continue with data transfer of the program file from the mobile device.

According to another aspect of the disclosure, the method is to be implemented by the vehicle previously mentioned. The power device includes the power switch operable to switch between a Key ON state where the dashboard device is powered by the power device and a Key OFF state where the dashboard device is only powered by the power device for a preset duration. The method includes the following steps of:
a) receiving, by the dashboard device when the dashboard device is powered by the power device in either one of the Key ON state and the Key OFF state, and after establishing a wireless connection between the wireless communication module of the dashboard device and the mobile device, a data stream of the program file from the mobile device via the wireless connection;
b) making, by the dashboard device, a pause in receiving the data stream of the program file from the mobile device when it is determined that the wireless connection between the dashboard device and the mobile device is interrupted;
c) resuming, by the dashboard device, receiving the data stream of the program file from the mobile device via the wireless communication module after recovering the wireless connection between the dashboard device and the mobile device from interruption; and
d) repeating steps b) and c) by the dashboard device so as to continue with data transfer of the program file from the mobile device until the dashboard device obtains a complete copy of the program file from the mobile device.

According to still another aspect of the disclosure, a variant of the system of the vehicle whose firmware is to be updated includes the power device, and is communicable with the mobile device which stores the program file for updating the firmware. The system includes a dashboard device being electrically connected to the power device. The dashboard device includes a wireless communication module, a storage module, and a processing module that is electrically connected to the wireless communication module and the storage module. The processing module is configured to establish, via the wireless communication module, a wireless connection between the dashboard device and the mobile device when the dashboard device is powered by the power device. The processing module is configured to receive, when it is determined that a current speed of the vehicle is greater than a predetermined speed, a data stream of the program file from the mobile device via the wireless connection so as to store the data stream of the program file thus received in the storage module. The processing module is configured to make a pause in receiving the data stream of the program file from the mobile device via the wireless communication module when it is determined that the current speed of the vehicle is not greater than the predetermined speed. The processing module is configured to resume receiving the data stream of the program file from the mobile device via the wireless communication module when it is determined that the current speed of the vehicle is again greater than the predetermined speed so as to continue with data transfer of the program file from the mobile device.

According to yet another aspect of the disclosure, a variant of the method for updating the firmware of the vehicle is to be implemented the variant of the system of the vehicle whose firmware is to be updated. The method includes the following steps of:
A) establishing, by the dashboard device via the wireless communication module, a wireless connection between the wireless communication module of the dashboard device and the mobile device when the dashboard device is powered by the power device;
B) receiving, by the dashboard device when it is determined that a current speed of the vehicle is greater than a predetermined speed, a data stream of the program file from the mobile device via the wireless connection;
C) making, by the dashboard device, a pause in receiving the data stream of the program file from the mobile device when it is determined that the current speed of the vehicle is not greater than the predetermined speed;
D) resuming, by the dashboard device, receiving the data stream of the program file from the mobile device via the wireless communication module when it is determined that the current speed of the vehicle is again greater than the predetermined speed; and
E) repeating steps C) and D) by the dashboard device so as to continue with data transfer of the program file from the mobile device until the dashboard device obtains a complete copy of the program file from the mobile device.

Other features and advantages of the disclosure will become apparent in the following detailed description of the embodiments with reference to the accompanying drawings, of which:
Figure 1 is a partial schematic perspective view illustrating an embodiment of a vehicle according to the disclosure;
Figure 2 is a perspective schematic view illustrating an embodiment of a power switch being switched to one of a Key ON state and a Key OFF state;
Figure 3 is a block diagram illustrating an embodiment of a system of the vehicle whose firmware is to be updated;
Figure 4 is a flow diagram illustrating a first embodiment of a method for updating the firmware of the vehicle;
Figure 5 is a flow diagram illustrating a second embodiment of the method for updating the firmware of the vehicle; and
Figure 6 is a flow diagram illustrating a third embodiment of the method for updating the firmware of the vehicle.

Before the disclosure is described in greater detail, it should be noted that where considered appropriate, reference numerals or terminal portions of reference numerals have been repeated among the figures to indicate corresponding or analogous elements, which may optionally have similar characteristics.

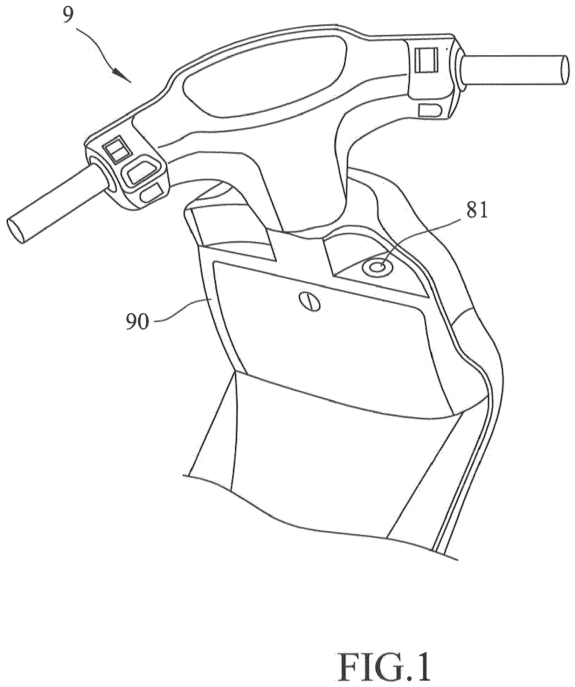

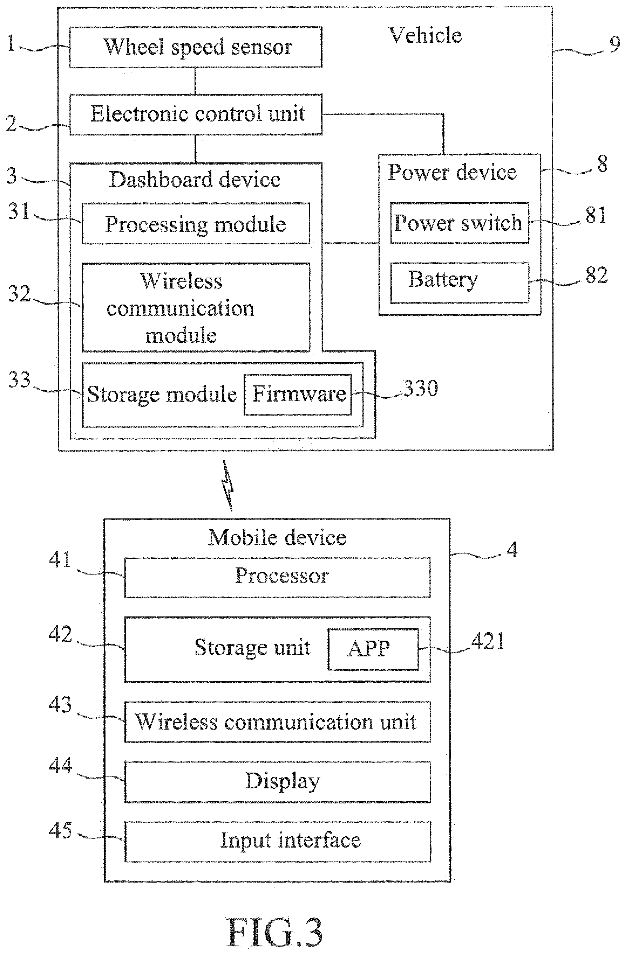

Referring to Figures 1 to 3, an embodiment of a system of a vehicle 9 whose firmware is to be updated is illustrated. The vehicle 9 may be implemented by one of a motorcycle, an automobile, an All Terrain Vehicle (ATV), a Utility Vehicle (UV), an electric scooter, or the like. As shown in Figures 1 and 3, the vehicle 9 includes a vehicle body 90, a set of wheels (not shown) rotatably connected to the vehicle body 90, a wheel speed sensor 1 configured to detect a speed of wheel rotation of the vehicle 9, a dashboard device 3, an electronic control unit (ECU) 2 electrically connected between the wheel speed sensor 1 and the dashboard device 3, a power device 8 electrically connected to the ECU 2 and the dashboard device 3.

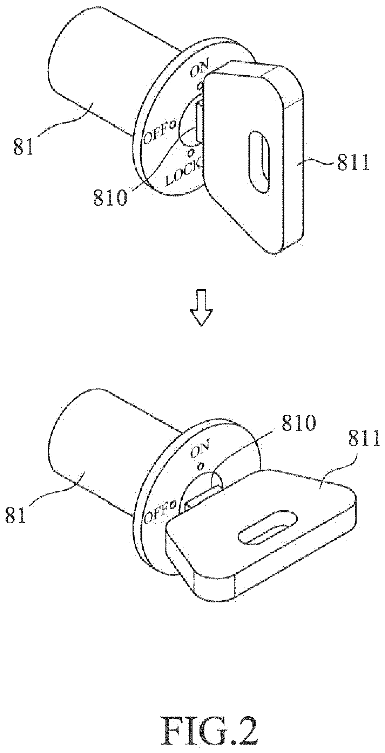

Referring to Figures 2 and 3, the power device 8 includes a battery 82 and a power switch 81 that is a main switch of the vehicle 9 and that is operable to switch between a Key ON state and a Key OFF state. The power switch 81 includes a keyhole 810 and a key 811 configured to be inserted into the keyhole 810 as shown in Figure 2. By turning the key 811 inserted in the key hole 810, the power switch 81 can be switched to the Key ON state when the key is turned clockwise to a position labeled "ON", and to the Key OFF state when the key is turned counterclockwise to another position labeled "OFF". It should be noted that implementation of the power switch 81 is not limited to what is disclosed herein, and may vary in other embodiments. For example, the power switch 81 may be implemented by a push switch or a knob switch that is turnable to switch between states after the vehicle 9 is unlocked through detection of a chip key (e.g., a keyless ignition system).

In one embodiment, the system of this disclosure includes the dashboard device 3. The dashboard device 3 is configured to be powered by the power device 8 when the power switch 81 is switched to the Key ON state, and to be temporarily powered by the power device 8 for a preset duration (and the preset duration only) counting from the time when the power switch 81 is switched to the Key OFF state. When the preset duration during which the dashboard device 3 is temporarily powered by the power device 8 when the power switch 81 is in the Key OFF state has elapsed, the dashboard device 3 ceases to be powered by the power device 8. The dashboard device 3 includes a wireless communication module 32, a storage module 33, and a processing module 31 which is electrically connected to the wireless communication module 32 and the storage module 33. The processing module 31 may be implemented by a processor, a Central Processing Unit (CPU), a microprocessor or any circuit configurable/programmable in a software manner and/or hardware manner to implement functionalities of this disclosure.

In this embodiment, the storage module 33 may be implemented by a flash memory, a hard disk drive or a solid state disk, but is not limited thereto. The storage module 33 is configured to store firmware 330 that serves as an operating system (OS) of the dashboard device 3. It is worth to note that the storage module 33 stores an initial version of the firmware 330 as the vehicle 9 leaves the factory. This disclosure enables users of the vehicle 9 to update the firmware 330 stored in the storage module 33 to a newer version if the newer version of the firmware is published by a manufacturer of the vehicle 9.

In this embodiment, the wireless communication module 32 is implemented by a Bluetooth wireless interface, but implementation thereof is not limited thereto. The vehicle 9 is communicable, via the wireless communication module 32, with a mobile device 4 which is adapted to store a program file for updating the firmware 330.

The mobile device 4 may be implemented by a smartphone or a tablet, but is not limited thereto. In this embodiment, the mobile device 4 includes a processor 41, a storage unit 42 storing an application program (APP) 421 for facilitating an update of the firmware 330 stored in the vehicle 9, a wireless communication unit43 (e.g., a Bluetooth wireless interface), a display 44 and an input interface 45 (e.g., a touchscreen or a keypad).

The processing module 31 of the dashboard device 3 is configured to receive, when the dashboard device 3 is powered by the power device 8, and after establishing a wireless connection between the wireless communication module 32 of the dashboard device 3 and the mobile device 4, a data stream of the program file from the mobile device 4 via the wireless connection, so as to store the data stream of the program file thus received in the storage module 33. The processing module 31 is configured to make a pause in receiving the data stream of the program file from the mobile device 4 when it is determined that the wireless connection between the dashboard device 3 and the mobile device 4 is interrupted. The processing module 31 is configured to resume receiving the data stream of the program file from the mobile device 4 via the wireless communication module 32 after recovering the wireless connection between the dashboard device 3 and the mobile device 4 from interruption so as to continue with the data transfer of the program file from the mobile device 4.

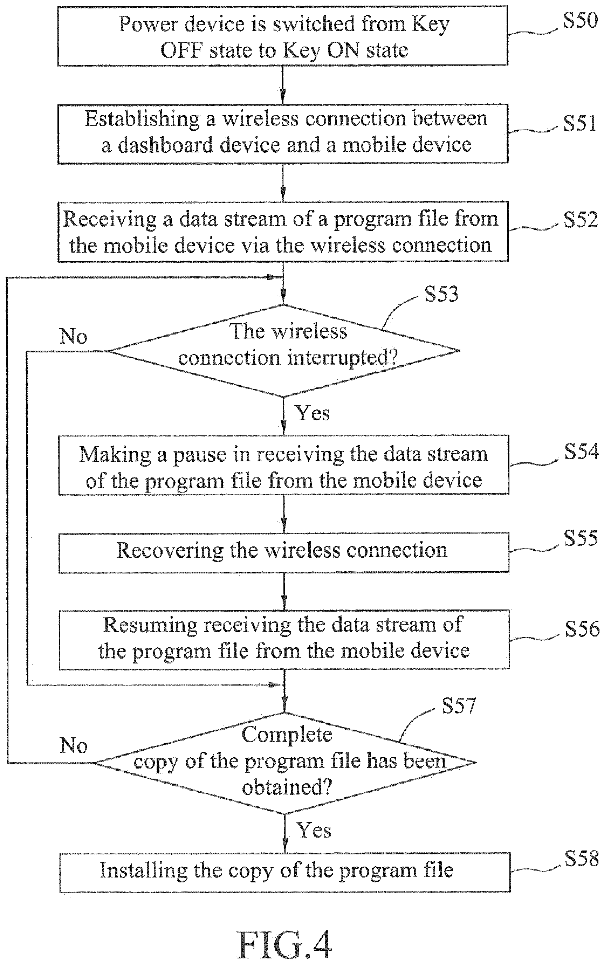

Referring to Figures 3 and 4, a first embodiment of a method for updating the firmware of the vehicle of this disclosure is illustrated. The method is to be implemented by the vehicle 9 mentioned above. The method includes the following steps S50 to S58.

In step S50, the power device 81 is switched, by turning the key 811, from the Key OFF state to the Key ON state, so that the dashboard device 3 is powered by the power device 8. Subsequently, the dashboard device 3 establishes the wireless connection (i.e., a Bluetooth connection in this embodiment) between the wireless communication module 32 of the dashboard device 3 and the wireless communication unit 43 of the mobile device 4 as shown in step S51. When the dashboard device 8 is powered by the power device 8 in the Key ON state and after establishing the wireless connection, the dashboard device 3 receives a data stream of the program file from the mobile device 4 via the wireless connection as shown in step S52.

Specifically speaking, in step S52, in a scenario that the program file for updating the firmware 330 of the vehicle 9 (i.e., a newer version of the firmware 330) has been downloaded by the APP 421 executed in the mobile device 4 and has been stored in the storage unit 42 of the mobile device 4, the processing module 31 of the dashboard device 3 receives the data stream of the program file from the mobile device 4 via the wireless connection, so as to store the data stream of the program file thus received in the storage module 33.

In step S53, the processing module 31 determines whether the wireless connection between the wireless communication module 32 of the dashboard device 3 and the wireless communication unit 43 of the mobile device 4 is interrupted.

In the affirmative, i.e., when it is determined in step S53 that the wireless connection between the wireless communication module 32 of the dashboard device 3 and the wireless communication unit 43 of the mobile device 4 is interrupted, the flow goes to step S54. In step S54, the processing module 31 of the dashboard device 3 makes a pause in receiving the data stream of the program file from the mobile device 4. In this embodiment, interruption of the wireless connection may be caused due to power of a battery (not shown) of the mobile device 4 being used up, or electromagnetic interference. Thereafter, the dashboard device 3 tries to recover the wireless connection between the wireless communication module 32 of the dashboard device 3 and the wireless communication unit 43 of the mobile device 4 as shown in step S55. For example, when the battery of the mobile device 4 is recharged or is replaced by a new one, the wireless connection between the wireless communication module 32 of the dashboard device 3 and the wireless communication unit 43 of the mobile device 4 can be recovered.

In step S56, the dashboard device 3 resumes receiving the data stream of the program file from the mobile device 4 via the wireless communication module 32 after recovering the wireless connection between the dashboard device 3 and the mobile device 4 from interruption.

Otherwise, when it is determined in step S53 that the wireless connection between the wireless communication module 32 of the dashboard device 3 and the wireless communication unit 43 of the mobile device 4 is not interrupted, the flow proceeds to step S57, where the processing module 31 determines whether the dashboard device 3 has obtained a complete copy of the program file from the mobile device 4.

When it is determined in step S57 that the dashboard device 3 has not yet obtained the complete copy of the program file from the mobile device 4, the dashboard device 3 performs step S53 once again. In other words, steps S53 to S56 may be repeated so as to enable continuous data transfer of the program file from the mobile device 4 until the dashboard device 3 obtains a complete copy of the program file from the mobile device 4.

On the other hand, when it is determined in step S57 that the dashboard device 3 has obtained the complete copy of the program file from the mobile device 4, the dashboard device 3 automatically installs the copy of the program file so as to update the firmware 330 of the vehicle 9 as shown in step S58. Specifically speaking, the processing module 31 upgrades the firmware 330 of the vehicle 9 in the background (e.g., background execution) when the power switch 81 is in the Key ON state. The processing module 31 stores the newer version of the firmware 330 obtained by executing the copy of the program file in the storage module 33 so as to replace the original firmware 330. In addition, prior to upgrading the firmware 330, the processing module 31 records a current state of execution of tasks (e.g., tasks routine to a vehicle processor), outputs of the dashboard device 3 (e. g. , what are outputted for display on a screen), and so on, such that the processing module 31 is capable of restoring those thus recorded after the upgrading is completed. Therefore, an automatic and imperceptible upgrading service is realized by the first embodiment of the method of this disclosure, and a user of the vehicle 9 does not have to spend time on upgrading the firmware 330 of the vehicle 9.

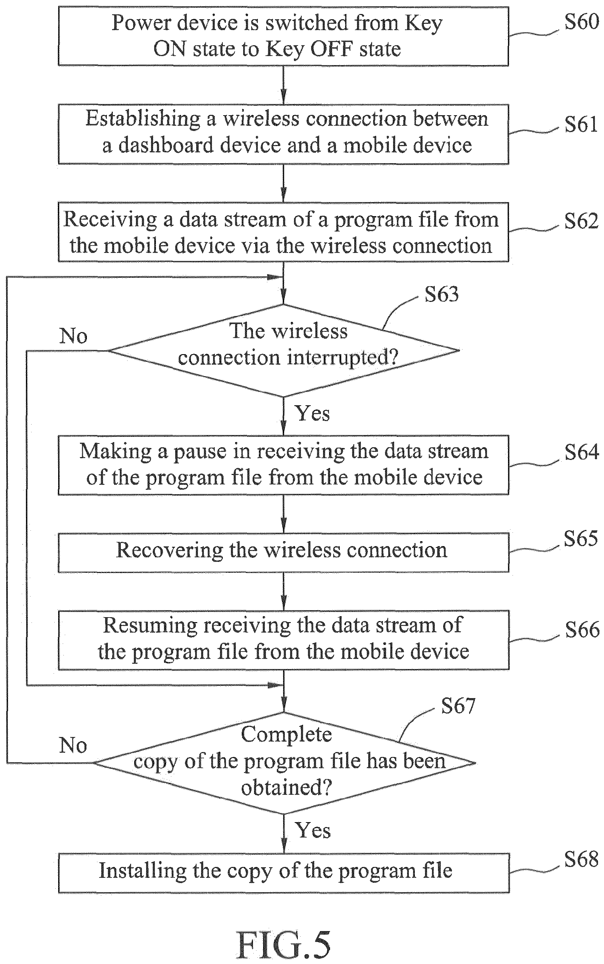

Referring to Figures 3 and 5, a second embodiment of the method for updating firmware 330 of a vehicle 9 of this disclosure is illustrated. The method is to be implemented by the vehicle 9 mentioned previously. The method includes the following steps S60 to S68.

In step S60, the power device 81 is switched, by turning the key 811, from the Key ON state to the Key OFF state. In the Key OFF state, the ECU 2 is not powered by the power device 8 while the dashboard device 3 is powered temporarily by the power device 8 for the preset duration (therefore, the Key OFF state is also called a standby state), so if the wireless connection exists between the wireless communication module 32 of the dashboard device 3 and the wireless communication unit 43 of the mobile device 4, the wireless connection can be maintained for the preset duration. The preset duration may be implemented to be forty-eight hours, but is not limited thereto. Once the preset duration has elapsed, the whole vehicle 9 (including the dashboard device 3 and the ECU 2) is no longer powered by the power device 8, and the wireless connection between the dashboard device 3 and the mobile device 4 (if any) is interrupted.

In step S61, the dashboard device 3 establishes the wireless connection (e.g., a Bluetooth connection) between the wireless communication module 32 of the dashboard device 3 and the wireless communication unit 43 of the mobile device 4.

In step S62, when the program file for updating the firmware 330 has been downloaded and has been stored in the storage unit 42 of the mobile device 4 by the APP 421, and after the wireless connection has been established in step S61, the processing module 31 of the dashboard device 3 receives a data stream of the program file from the mobile device 4 via the wireless connection, and stores the data stream of the program file thus received in the storage module 33.

In this embodiment, steps S60 to S62 may be performed in a scenario where the vehicle 9 is parked with the power switch 81 switched to the Key OFF state, and the mobile device 4 is left within a wireless communicable range of the vehicle 9 and has stored therein the program file for updating the firmware 330. Since the dashboard device 3 is still temporarily powered by the power device 8 so as to maintain the wireless connection, the dashboard device 3 is capable of receiving the data stream of the program file from the mobile device 4 and storing the data stream thus received in the storage module 33 even if the power switch 81 has been switched to the Key OFF state.

In step S63, the processing module 31 determines whether the wireless connection between the wireless communication module 32 of the dashboard device 3 and the wireless communication unit 43 of the mobile device 4 is interrupted.

In the affirmative, i.e., when it is determined in step S63 that the wireless connection between the wireless communication module 32 of the dashboard device 3 and the wireless communication unit 43 of the mobile device 4 is interrupted, the flow proceeds to step S64. In step S64, the processing module 31 of the dashboard device 3 makes a pause in receiving the data stream of the program file from the mobile device 4. In this embodiment, interruption of the wireless connection may occur in the aforementioned scenario where the mobile device 4 is temporarily carried away from the vehicle 9 which is parked with the power switch 81 switched to the Key OFF state, such that a distance between the vehicle 9 and the mobile device 4 is too far to maintain the wireless connection. Thereafter, the dashboard device 3 tries to recover the wireless connection between the wireless communication module 32 of the dashboard device 3 and the wireless communication unit 43 of the mobile device 4 as shown in step S65. For example, when the mobile device 4 is carried back within a wireless communicable range of the vehicle 9, the wireless connection between the wireless communication module 32 of the dashboard device 3 and the wireless communication unit 43 of the mobile device 4 can be recovered.

In step S66, the dashboard device 3 resumes receiving the data stream of the program file from the mobile device 4 via the wireless communication module 32 after recovering the wireless connection between the dashboard device 3 and the mobile device 4 from interruption.

When it is determined in step S63 that the wireless connection between the wireless communication module 32 of the dashboard device 3 and the wireless communication unit 43 of the mobile device 4 is not interrupted, and after step S66, the flow goes to step S67, in which the processing module 31 determines whether the dashboard device 3 has obtained a complete copy of the program file from the mobile device 4.

When it is determined in step S67 that the dashboard device 3 has not yet obtained the complete copy of the program file from the mobile device 4, the dashboard device 3 performs step S63 once again. In other words, steps S63 to S66 may be repeated so as to continue with the data transfer of the program file from the mobile device 4 until the dashboard device 3 obtains the complete copy of the program file from the mobile device 4.

On the other hand, when it is determined in step S67 that the dashboard device 3 has obtained the complete copy of the program file from the mobile device 4, the dashboard device 3 automatically installs the copy of the program file so as to update the firmware 330 of the vehicle 9 as shown in step S68. Specifically speaking, the processing module 31 may still be capable of upgrading the firmware 330 of the vehicle 9 even when the power switch 81 is in the Key OFF state because the dashboard device 3 is still temporarily powered by the power module 8 for the preset duration (i.e., the standby state). The processing module 31 stores the newer version of the firmware 330 obtained by executing the program file in the storage module 33 so as to replace the original firmware 330. In addition, prior to upgrading the firmware 330, the processing module 31 records a current state of execution of tasks, outputs of the dashboard device 3 (e.g., what are outputted for display on the screen), and so on, such that the processing module 31 is capable of restoring those thus recorded after the upgrading is completed. Therefore, an automatic and imperceptible upgrading service is realized by the second embodiment of the method of this disclosure, and a user of the vehicle 9 does not have to spend time on upgrading the firmware 330 of the vehicle 9.

Another embodiment of the system of the vehicle 9 whose firmware 330 is to be updated is described in the following. Similar to the previously mentioned embodiment, the system includes the dashboard device 3 which is electrically connected to the power device 8 of the vehicle 9. The vehicle 9 is communicable with the mobile device 4 which stores a program file for updating the firmware 330 of the vehicle 9. The dashboard device 3 includes the wireless communication module 32, the storage module 33, and the processing module 31 that is electrically connected to the wireless communication module 32 and the storage module 33. In this embodiment, the wireless communication module 32 is implemented as a Bluetooth wireless interface, and the processing module 31 is implemented by a microprocessor.

It should be noted that, in this embodiment, the vehicle 9 also includes a wheel speed sensor 1 that is configured to detect a speed of wheel rotation of the vehicle 9, and an electronic control unit (ECU) 2 that is connected between the wheel speed sensor 1 and the dashboard device 3. The ECU 2 is configured to relay the speed of wheel rotation thus detected to the dashboard device 3. The processing module 31 of the dashboard device 3 is configured to determine a current speed of the vehicle 9 based on the speed of wheel rotation thus detected.

In this embodiment, the processing module 31 is configured to establish a wireless connection between the wireless communication module 32 of the dashboard device 3 and the mobile device 4 when the dashboard device 3 is powered by the power device 8. The processing module 31 is configured to receive, when it is determined that the current speed of the vehicle 9 is greater than a predetermined speed, a data stream of the program file from the mobile device 4 via the wireless connection so as to store the data stream of the program file thus received in the storage module 33. The processing module 31 is configured to make a pause in receiving the data stream of the program file from the mobile device 4 via the wireless communication module 32 when it is determined that the current speed of the vehicle 9 ceases to be greater than the predetermined speed. The processing module 31 is configured to resume receiving the data stream of the program file from the mobile device 4 via the wireless communication module 32 once it is determined that the current speed of the vehicle 9 is again greater than the predetermined speed so as to continue with the data transfer of the program file from the mobile device 4. In this embodiment, the predetermined speed is implemented to be zero kilometers per hour, but is not limited thereto. The predetermined speed may be 10 kilometers per hour in other implementation of this embodiment.

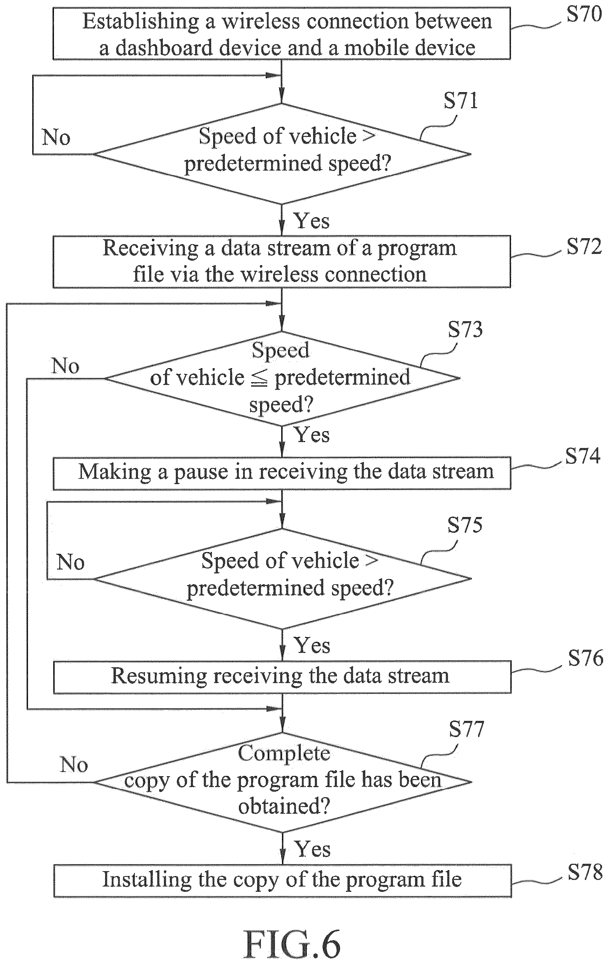

Referring to Figures 3 and 6, a third embodiment of the method for updating firmware 330 of a vehicle 9 of this disclosure is illustrated. The method is to be implemented by said another embodiment of the vehicle 9 mentioned above. The method includes the following steps S70 to S78.

InstepS70, the processing module 31 of the dashboard device 3 establishes, via the wireless communication module 32, a wireless connection between the dashboard device 3 and the mobile device 4 when the dashboard device 3 is powered by the power device 8. A flow of this method proceeds to the following steps when it is determined by the processing module 31 via the wireless connection that there is a program file for updating the firmware 330 of the vehicle 9 stored in the mobile device 4.

In step S71, the processing module 31 of the dashboard device 3 determines whether a current speed of the vehicle 9 is greater than the predetermined speed. The predetermined speed may be implemented to be zero kilometers per hour or ten kilometers per hour, but is not limited thereto. It is worth noting that the current speed of the vehicle 9 is determined by the processing module 31 of the dashboard device 3 based on the speed of wheel rotation detected by the wheel speed sensor 1 and relayed to the processing module 31 by the ECU 2. Step S71 is repeated until it is determined that the current speed of the vehicle 9 is greater than the predetermined speed, at which time the flow proceeds to step S72.

In step S72, the processing module 31 of the dashboard device 3 receives a data stream of the program file from the mobile device 4 via the wireless connection so as to store the data stream of the program file thus received in the storage module 33.

In step S73, the processing module 31 of the dashboard device 3 determines whether the current speed of the vehicle 9 is not greater than the predetermined speed (e.g., zero kilometers per hour or ten kilometers per hour).

When it is determined in step S73 that the current speed of the vehicle 9 is not greater than the predetermined speed, step S74 is performed, in which the processing module 31 of the dashboard device 3 makes a pause in receiving the data stream of the program file from the mobile device 4 via the wireless connection.

It is worth to note that since a driver, when driving a vehicle, is usually forbidden from operating a mobile device for safety concerns, the third embodiment of the method of this disclosure enables the processing module 31 of the dashboard device 3 to utilize this time period, during which the vehicle 9 is moving (i.e., the current speed of the vehicle 9 is non-zero) and the mobile device 4 is not operated, for obtaining the data stream of the program file from the mobile device 4. Moreover, the processing module 31 makes a pause in receiving the data stream of the program file from the mobile device 4 once the vehicle 9 comes to a stop (i.e., the current speed of the vehicle 9 is not greater than zero), so that the mobile device 4 may be utilized for talking, sending text messages, browsing websites, or the like with the computational resource of the mobile device 4 being temporarily released from the task of transmitting the data stream of the program file to the dashboard device 3.

In step S75, the processing module 31 of the dashboard device 3 once again determines whether the current speed of the vehicle 9 is greater than the predetermined speed. Step S75 is repeated until it is determined that the current speed of the vehicle 9 is greater than the predetermined speed.

The flow proceeds to step S76 when it is determined in step S75 that the current speed of the vehicle 9 is again greater than the predetermined speed. In step S76, the processing module 31 of the dashboard device 3 resumes receiving the data stream of the program file from the mobile device 4 via the wireless communication module 32.

In step S77, the processing module 31 of the dashboard device 3 determines whether the dashboard device 3 has obtained a complete copy of the program file from the mobile device 4. The processing module 31 of the dashboard device 3 repeats steps S73 to S76 so as to carry on with the data transfer of the program file from the mobile device 4 until it is determined in step S74 that the dashboard device 3 has obtained the complete copy of the program file from the mobile device 4.

The flow proceeds to step S78 when the determination made in step S77 is affirmative. In step S78, the processing module 31 of the dashboard device 3 automatically installs the copy of the program file which is stored in the storage module 33 of the dashboard device 3 so as to update the firmware 330 of the vehicle 9. Specifically speaking, the processing module 31 upgrades the firmware 330 of the vehicle 9 in the background when the dashboard device 3 is powered by the power module 8. The processing module 31 stores the newer version of the firmware 330 obtained by executing the copy of the program file in the storage module 33 so as to replace the original firmware 330. In addition, prior to upgrading the firmware 330, the processing module 31 records a current state of execution of tasks, outputs of the dashboard device 3 (e.g., what are outputted for display on a screen), and so on, such that the processing module 31 is capable of restoring those thus recorded after the upgrading is completed. Therefore, an automatic and imperceptible upgrading service is realized by the third embodiment of the method of this disclosure, and a user of the vehicle 9 does not have to spend time on upgrading the firmware 330 of the vehicle 9.

In summary, the dashboard device 3 of the first and second embodiments of the method for updating firmware of the vehicle according to the disclosure is configured to make a pause in or to resume receiving the data stream of the program file from the mobile device 4 based on whether the wireless connection between the dashboard device 3 and the mobile device 4 is interrupted or recovered, so that data transfer of the program file can continue in the presence of the wireless connection. In addition, the dashboard device 3 of the third embodiment of the method for updating firmware of a vehicle is configured to make a pause in or to resume receiving the data stream of the program file from the mobile device 4 based on whether or not the current speed of the vehicle 9 is greater than the predetermined speed, and allows usage of the mobile device 4 with the computational resources being released from occupation by the data transmission task (of the program file) when the vehicle 9 is stopped. Furthermore, in the first to third embodiments, the dashboard device 3 automatically installs the copy of the program file in the background, so that the firmware 330 of the vehicle 9 is imperceptibly updated. Therefore, the system and the method of this disclosure enable a user of a vehicle to spend less time on updating the firmware thereof.

In the description above, for the purposes of explanation, numerous specific details have been set forth in order to provide a thorough understanding of the embodiments. It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects.

## Claims

1. A method for updating firmware (330) of a vehicle (9), the method to be implemented by the vehicle (9) which is communicable with a mobile device (4) storing a program file for updating the firmware (330), the vehicle (9) including a dashboard device (3) and a power device (8), the dashboard device (3) including a processing module (31) and a wireless communication module (32), the power device (8) including a power switch (81) operable to switch between a Key ON state where the dashboard device (3) is powered by the power device (8) and a Key OFF state where the dashboard device (3) is powered by the power device (8) only for a preset duration, the method **characterized by** steps of:
a) receiving, by the dashboard device (3) when the dashboard device (3) is powered by the power device (8) in either one of the Key ON state and the Key OFF state, and after establishing a wireless connection between the wireless communication module (32) of the dashboard device (3) and the mobile device (4), a data stream of the program file from the mobile device (4) via the wireless connection;
b) making, by the dashboard device (3), a pause in receiving the data stream of the program file from the mobile device (4) when it is determined that the wireless connection between the dashboard device (3) and the mobile device (4) is interrupted;
c) resuming, by the dashboard device (3), the receiving of the data stream of the program file from the mobile device (4) via the wireless communication module (32) after recovering the wireless connection between the dashboard device (3) and the mobile device (4) from interruption; and
d) repeating steps b) and c) by the dashboard device (3) so as to continue with data transfer of the program file from the mobile device (4) until the dashboard device (3) obtains a complete copy of the program file from the mobile device (4).

2. The method as claimed in claim 1, further **characterized by**, subsequent to step d):
e) automatically installing, by the dashboard device (3), the copy of the program file so as to update the firmware (330) of the vehicle (9).

3. The method as claimed in claim 1 or 2, **characterized in that** in step a), when the preset duration has elapsed, the dashboard (3) is no longer powered by the power device (8), and the wireless connection between the dashboard device (3) and the mobile device (4) is interrupted.

4. A system of a vehicle (9) whose firmware (330) is to be updated, the vehicle (9) including a power device (8), and being communicable with a mobile device (4) which stores a program file for updating the firmware (330), and, said system **characterized by**:
a dashboard device (3) that is electrically connected to the power device (8), and that includes
a wireless communication module (32),
a storage module (33), and
a processing module (31) which is electrically connected to said wireless communication module (32) and said storage module (33), and is configured to
receive, when said dashboard device (3) is powered by the power device (8), and after establishing a wireless connection between said wireless communication module (32) of said dashboard device (3) and the mobile device (4), a data stream of the program file from the mobile device (4) via the wireless connection, so as to store the data stream of the program file thus received in said storage module (33),
make a pause in receiving the data stream of the program file from the mobile device (4) when it is determined that the wireless connection between said dashboard device (3) and the mobile device (4) is interrupted, and
resume receiving the data stream of the program file from the mobile device (4) via said wireless communication module (32) after recovering the wireless connection between said dashboard device (3) and the mobile device (4) from interruption so as to continue with data transfer of the program file from the mobile device (4).

5. The system as claimed in claim 4, the power device (8) including a power switch (81) operable to switch between a Key ON state and a Key OFF state, **characterized in that**:
said dashboard device (3) is configured to be powered by the power device (8) when the power switch (81) is switched to the Key ON state, and to be powered by the power device (8) only for a preset duration after the power switch (81) is switched to the Key OFF state.

6. The system as claimed in claim 5, **characterized in that** when the preset duration has elapsed, said dashboard device (3) is no longer powered by the power device (8), and the wireless connection between said dashboard device (3) and the mobile device (4) is interrupted.

7. The system as claimed in any one of claims 4 to 6, the power switch (81) being a main switch of the vehicle (9), **characterized in that** said wireless communication module (32) includes a Bluetooth wireless interface.

8. A method for updating firmware of a vehicle (9), the method to be implemented by the vehicle (9) which is communicable with a mobile device (4) storing a program file for updating the firmware, the vehicle (9) including a dashboard device (3) and a power device (8), the dashboard device (3) including a processing module (31) and a wireless communication module (32), the method **characterized by**:
A) establishing, by the dashboard device (3) via the wireless communication module (32), a wireless connection between the dashboard device (3) and the mobile device (4) when the dashboard device (3) is powered by the power device (8);
B) receiving, by the dashboard device (3) when it is determined that a current speed of the vehicle is greater than a predetermined speed, a data stream of the program file from the mobile device (4) via the wireless connection;
C) making, by the dashboard device (3), a pause in receiving the data stream of the program file from the mobile device (4) when it is determined that the current speed of the vehicle (9) is not greater than the predetermined speed;
D) resuming, by the dashboard device (3), receiving the data stream of the program file from the mobile device (4) via the wireless communication module (32) when it is determined that the current speed of the vehicle (9) is again greater than the predetermined speed; and
E) repeating steps C) and D) by the dashboard device (3) so as to continue with data transfer of the program file from the mobile device (4) until the dashboard device (3) obtains a complete copy of the program file from the mobile device (4).

9. The method as claimed in claim 8, further **characterized by**, subsequent to step E):
F) automatically installing, by the dashboard device (3), the copy of the program file so as to update the firmware of the vehicle.

10. The method as claimed in claim 8 or 9, **characterized in that** the predetermined speed is zero kilometers per hour.

11. The method as claimed in any one of claims 8 to 10, the vehicle (9) further including a wheel speed sensor (1) that is configured to detect a speed of wheel rotation of the vehicle, and an electronic control unit (2) that is connected between the wheel speed sensor (1) and the dashboard device (3) and that is configured to relay the speed of wheel rotation thus detected by the wheel speed sensor (1) to the dashboard device (3),
**characterized in that** in step B), the current speed of the vehicle is determined by the dashboard device (3) based on the speed of wheel rotation.

12. A system of a vehicle (9) whose firmware is to be updated, the vehicle (9) including a power device (8), and being communicable with a mobile device (4) which stores a program file for updating the firmware, said system **characterized by**:
a dashboard device (3) being electrically connected to the power device (8), and including
a wireless communication module (32),
a storage module (33), and
a processing module (31) that is electrically connected to said wireless communication module (32) and said storage module (33), and that is configured to
establish, via said wireless communication module (32), a wireless connection between said dashboard device (3) and the mobile device (4) when said dashboard device (3) is powered by the power device (8)
receive, when it is determined that a current speed of the vehicle is greater than a predetermined speed, a data stream of the program file from the mobile device (4) via the wireless connection so as to store the data stream of the program file thus received in said storage module (33),
make a pause in receiving the data stream of the program file from the mobile device (4) via said wireless communication module (32) when it is determined that the current speed of the vehicle (9) is not greater than the predetermined speed, and
resume receiving the data stream of the program file from the mobile device (4) via said wireless communication module (32) when it is determined that the current speed of the vehicle (9) is again greater than the predetermined speed so as to continue with data transfer of the program file from the mobile device (4) .

13. The system as claimed in claim 12, **characterized in that** the predetermined speed is zero kilometers per hour.

14. The system as claimed in claim 12 or 13, the vehicle (9) further including a wheel speed sensor (1) that is configured to detect a speed of wheel rotation of the vehicle, and an electronic control unit (2) that is connected between the wheel speed sensor (1) and the dashboard device (3) and that is configured to relay the speed of wheel rotation thus detected by the wheel speed sensor to said dashboard device (3),
**characterized in that** said dashboard device (3) is configured to determine the current speed of the vehicle based on the speed of wheel rotation.

15. The system as claimed in any one of claims 12 to 14, **characterized in that** said wireless communication module (32) includes a Bluetooth wireless interface.
